# EUROPEAN PATENT APPLICATION

(11) **EP 4 400 196 A1**
(43) Date of publication of application: **17.07.2024**
(21) Application number: 22867057.6
(22) Date of filing: 30.06.2022
(51) Int. Cl.: B01D 39/14, B01D 39/00, B01D 39/20, B21F 27/18, B60R 21/26

(54) **HOLLOW CYLINDRICAL FILTER, AND MANUFACTURING METHOD**

(30) Priority: 10.09.2021 JP 2021147781; 10.09.2021 JP 2021147782; 02.02.2022 JP 2022014817
(71) Applicant: Fuji Filter Manufacturing Co., Ltd., Tokyo 103-8308 (JP)
(72) Inventor: SHIOMI, Chika, Tokyo 103-8308 (JP); OHIGASHI, Tsutomu, Tokyo 103-8308 (JP)
(74) Representative: Stöckeler, Ferdinand
(86) International application number: PCT/JP2022/026317
(87) International publication number: WO 2023/037733

(57) **Abstract**

The present invention efficiently processes an end portion of a metallic wire rod on the winding start side at a low cost. A hollow cylindrical filter produced by winding a metallic wire rod 20 spirally and in a multilayered manner includes an inner cylindrical body 31 including a first wire rod layer L1 located on the innermost circumference and being wound with two or more layers of the metallic wire rod, and an outer cylindrical body 32 located immediately on the outer circumferential side of the inner cylindrical body and wound with the metallic wire rod. After the inner cylindrical body is formed, a start end portion 20a of the metallic wire rod is folded to be positioned on an outer circumferential side of the inner cylindrical body, and is further wound with the metallic wire rod to form the outer cylindrical body, whereby the start end portion of the metallic wire rod is folded and placed between the inner cylindrical body and the outer cylindrical body.

## Description

### Field

The present invention relates to a hollow cylindrical filter and a manufacturing method thereof.

### Background

A hollow cylindrical winding filter produced by winding a metallic wire rod spirally and in a multilayered manner is used as a filter that removes foreign substances from various types of fluids in a variety of domains. For example, Patent Literature 1 describes a winding filter to be used for an airbag inflator of an automobile, or the like.

This literature describes fixing of two or more adjacent portions where wires overlap each other to provide a winding filter that is inexpensive and high in the shape retaining property without heat treatment such as sintering on the entire winding filter.

### Citation List

### Patent Literature

Patent Literature 1: Japanese Patent Application Laid-open Publication No. 2007-319781

### Summary

### Technical Problem

In a case in which the entire winding filter is not subjected to heat treatment such as sintering, how to perform fixing or anti-fray treatment of an end portion on the winding start side and an end portion on the winding termination side is important. However, Patent Literature 1 does not specify how the end portion on the winding start side is treated although describing that a metallic wire rod in the outermost layer, which is on the winding termination side, is fixed.

The present invention has been achieved in view of the circumstances described above and has an object to process an end portion of a metallic wire rod on the winding start side at a low cost and with high efficiency.

### Solution to Problem

In order to solve the above problem, the present invention is a hollow cylindrical filter produced by winding a metallic wire rod spirally and in a multilayered manner, wherein a start end portion of the metallic wire rod is folded and placed between wire rod layers adjacent to each other.

### Advantageous Effects of Invention

According to the present invention, it is possible to process an end portion of a metallic wire rod on the winding start side at a low cost and with high efficiency.

### Brief Description of Drawings

[FIG. 1] FIG. 1 is a schematic perspective view of a filter according to one embodiment of the present invention.
[FIG. 2] FIG. 2 is a schematic front view illustrating a processing method of a start end portion of a filter according to a first embodiment of the present invention.
[FIGS. 3] FIGS. 3(a) to 3(d) are schematic diagrams for explaining manufacturing processes of a filter according to one embodiment of the present invention.
[FIG. 4] FIG. 4 is a schematic front view illustrating a processing method of a start end portion of a filter according to a second embodiment of the present invention.
[FIGS. 5] FIGS. 5 are diagrams illustrating a hollow cylindrical filter according to a third embodiment of the present invention, where (a) is a perspective view and (b) is a perspective view illustrating a part of the filter in a vertical section.
[FIGS. 6] FIGS. 6(a) to 6(d) are schematic diagrams for explaining manufacturing processes of a filter according to the third embodiment.
[FIGS. 7] FIGS. 7(e) and 7(f) are schematic diagrams for explaining manufacturing processes of a filter according to the third embodiment.
[FIGS. 8] FIGS. 8(a) and 8(b) are diagrams illustrating a part of a vertical section of a filter in an actual object photograph.
[FIG. 9] FIG. 9 is a perspective view illustrating a part of a hollow cylindrical filter according to a fourth embodiment of the present invention in a vertical section.
[FIG. 10] FIG. 10 is a perspective view illustrating a part of a hollow cylindrical filter according to a fifth embodiment of the present invention in a vertical section.
[FIG. 11] FIG. 11 is a perspective view illustrating a part of a hollow cylindrical filter according to a sixth embodiment of the present invention in a vertical section.

### Description of Embodiments

The present invention will be explained in detail below by embodiments illustrated in the drawings. Constituent elements, types, combinations, shapes, and relative arrangements in the embodiments are not intended to limit the scope of the present invention solely thereto but are merely explanatory examples, unless otherwise specified. Configurations illustrated in the embodiments may be implemented by being appropriately combined with one another unless any contradiction is caused.

### [Schematic shape of filter]

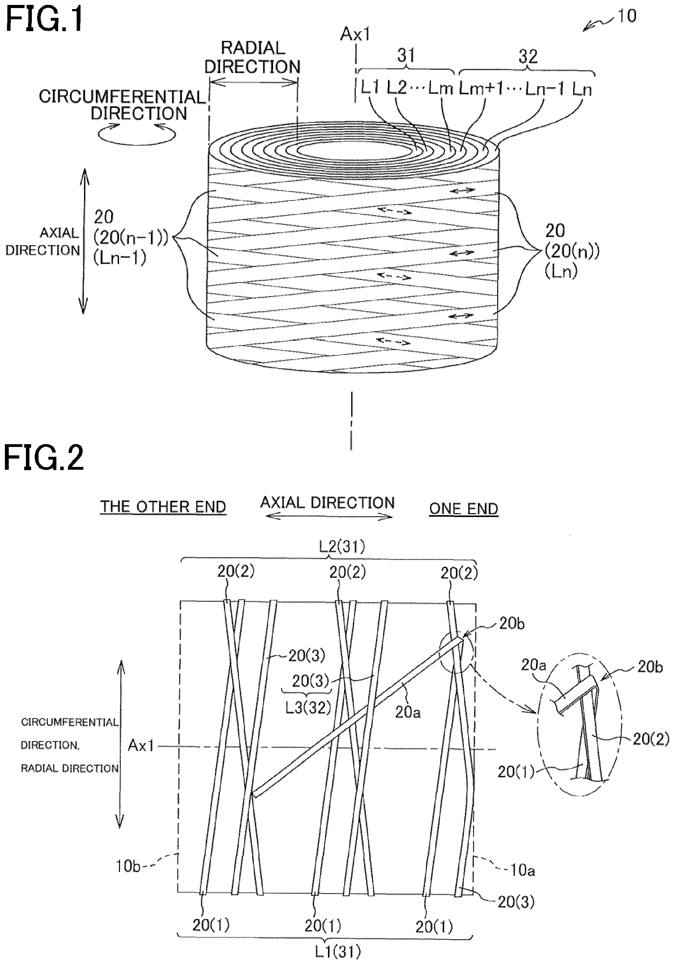

FIG. 1 is a schematic perspective view of a filter according to one embodiment of the present invention.

A hollow cylindrical filter (hereinafter, "filter") 10 according to the embodiment of the present invention is formed by winding at least one metallic wire rod 20 at a certain inclination angle with respect to an axial direction (an upper-lower direction in FIG. 1) spirally and in a multilayered manner with a certain pitch. Layers in each of which the metallic wire rod 20 is wound in the same direction are referred to as wire rod layers L1, L2, L3 ···. Metallic wire rods constituting each of the wire rod layers L 1, L2, L3 ··· extend in the same direction inclined with respect to the axial direction (a central axis Ax1) of the hollow cylindrical filter in front view, and metallic wire rods constituting wire rod layers adjacent in an inner-outer radius direction extend in directions intersecting with each other (are not parallel to each other).

A direction in which a metallic wire rod portion 20(n) (the thickness thereof is not illustrated) constituting an outermost wire rod layer Ln (n is a natural number) in FIG. 1 extends (the longitudinal direction of the metallic wire rod portion 20(n)) is a direction indicated by solid arrows, and a direction in which a metallic wire rod portion 20(n-1) constituting a wire rod layer Ln-1 just inside the wire rod layer Ln extends (the longitudinal direction of the metallic wire rod portion 20(n-1)) is a direction indicated by broken arrows. In this example, n is set to about 20 to 20000 (corresponding to about 10 to 10000 reciprocations).

That is, the filter 10 has one wire rod layer (for example, the wire rod layer L1) formed by spirally winding the metallic wire rod 20 at a certain inclination angle with respect to the axial direction, and another wire rod layer (for example, the wire rod layer L2) formed by winding the metallic wire rod to overlie the wire rod layer L1 on the outer circumferential side and spirally at an inclination angle different from that of the metallic wire rod constituting the wire rod layer L1. The metallic wire rod constituting the wire rod layer L1 and the metallic wire rod constituting another wire rod layer L2 adjacent to the wire rod layer L1 are configured to be non-parallel to the axial direction and to intersect with each other.

The inclination angle of the metallic wire rod constituting a wire rod layer with respect to the axial direction may be configured to vary in one wire rod layer.

The filter 10 is used to remove undesired substances or the like from various fluids such as a liquid or a gas, and depending on use applications such as an airbag inflator of an automobile, to cool simultaneously a fluid passing through the filter. This filter is first constituted to form a flow channel through which a fluid passes in a direction in which the wire rod layers overlap each other, that is, in the radial direction of the filter (the direction in which the wire rod layers lie one on top of another). The fluid may be passed from the inner diameter side of the filter to the outer diameter side thereof, or vice versa. The radial direction means a substantially radial direction with respect to the axial direction or the circumferential direction, without meaning the direction of the diameter (the direction of the radius) in a strict sense.

The dimension (such as the inner diameter, the outer diameter, and the sizes in the axial direction) of the filter is appropriately set according to the structure or the dimension of an apparatus to which the filter is incorporated.

Examples of the type of a metal as a material of the filter are iron, steel, stainless steel, nickel alloys, copper alloys, titanium alloys, and aluminum alloys. An optimum type of the metal is selected according to the use application of the filter.

The thickness of a metallic wire rod to be used for the filter, and the cross-sectional shape (the sectional shape in a direction orthogonal to the longitudinal direction of the metallic wire rod) thereof are appropriately determined according to the dimension of the filter, substances to be removed by the filter, pressure loss, or the like. For example, the sectional area of a metallic wire rod to be used for an inflator filter is about 0.007 to 3.2 mm^2 (the wire diameter is about 0.1 to 2.0 mm with respect to a metallic wire being a perfect circle in the cross-sectional shape).

A metallic wire rod obtained by rolling a metallic wire being a perfect circle in the cross-sectional shape into a predetermined shape is used for the filter. For example, a rectangular wire obtained by rolling a metallic wire into a flat rectangular shape in the cross-sectional shape is used as the metallic wire rod. Alternatively, a deformed wire obtained by rolling a metallic wire to have a deformed shape, such as a substantially W-shape, U-shape, J-shape, L-shape, X-shape, or other shapes in the cross-sectional shape, over the entire length in the longitudinal direction is used as the metallic wire rod. Alternatively, a deformed wire obtained by rolling a metallic wire in such a manner that the cross-sectional shape or the outer shape is not uniform over the entire length in the longitudinal direction of the metallic wire rod, in other words, the wire has a cross-sectional shape or an outer shape differing according to the position in the longitudinal direction of the metallic wire rod is used as the metallic wire rod. Such a deformed wire is obtained, for example, by rolling that causes the cross-sectional shape to vary with respect to each longitudinal length substantially the same as the width of the metallic wire rod.

In the filter 10, the metallic wire rod 20 is wound so as not to be twisted.

The filter 10 has a plurality of contact portions where metallic wire rod portions are in contact with each other. Heat treatment (for example, heat treatment for sintering) to join all the contact portions (or a plurality of the contact portions) in a lump may be performed on the filter 10. Alternatively, the contact portions of the filter 10 other than those at an end portion on the winding termination side may be unjoined portions where the portions are not joined. When heat treatment for sintering the entire filter 10 is not performed on the filter 10, the manufacturing cost of the filter 10 can be decreased and the manufacturing time of the filter 10 can be reduced.

### [First embodiment]

FIG. 2 is a schematic front view illustrating a processing method of a start end portion of a filter according to a first embodiment of the present invention.

As illustrated in FIG. 1, the filter 10 according to the invention is a so-called "winding hollow cylindrical filter" and is produced by winding one continuous metallic wire rod 20 or a plurality of metallic wire rods 20 spirally and in a multilayered manner.

The filter 10 includes an inner cylindrical body 31 located on the inner diameter side, and an outer cylindrical body 32 located on the outer diameter side. The inner cylindrical body 31 includes wire rod layers from a wire rod layer L1 located on the innermost circumference to a wire rod layer Lm (m is a natural number satisfying 2≤m<n). The outer cylindrical body 32 is located immediately on the outer circumference side of the inner cylindrical body 31. The outer cylindrical body 32 includes wire rod layers Lm+1 to Ln. The wire rod layer Lm and the wire rod layer Lm+1 are adjacent to each other.

In the filter 10, a start end portion 20a (an end portion on the winding start side) of the metallic wire rod 20 is folded and placed between the wire rod layers Lm and Lm+1 adjacent to each other.

FIG. 2 illustrates a state in which three wire rod layers L1 to L3 located on the inner circumference side are formed (a state in which metallic wire rod portions 20(1) to 20(3) are wound) in the filter 10. In FIG. 2, broken lines extending along the circumferential direction indicate the positions of one end edge (one end face) 10a in the axial direction of the filter 10 and the other end edge (the other end face) 10b. As indicated by one end edge 10a in FIG. 2, the end edge of the filter 10 in the axial direction corresponds to an axial position where the direction of the spiral of the metallic wire rod 20 changes (an axial position where the wire rod layers switch).

The metallic wire rod portion 20(1) constituting the wire rod layer L1 (a first wire rod layer) located on the innermost circumference is spirally wound from one end side of the filter in the axial direction to the other end side. The metallic wire rod portion 20(2) constituting the wire rod layer L2 is spirally wound from the other end side of the filter in the axial direction to the one end side to overlie the metallic wire rod portion 20(1) on the outer circumferential side thereof. In FIG. 2, the wire rod layers L1 and L2 corresponding to one reciprocation form the inner cylindrical body 31.

The start end portion 20a of the metallic wire rod 20 is folded back from the one end side in the axial direction toward the other end side to be positioned on the outer circumferential side of the wire rod layers L1 and L2. A folded-back portion 20b is formed between the start end portion 20a and the metallic wire rod portion 20(1). The folded-back portion 20b is located on an inner side than the one end edge 10a of the filter in the axial direction.

The metallic wire rod portion 20(3) constituting the wire rod layer L3 is spirally wound from the one end side of the filter in the axial direction to the other end side to overlie the start end potion 20a and the metallic wire rod portion 20(2) on the outer circumferential side thereof. The wire rod layer L3 constitutes the outer cylindrical body 32.

The start end portion 20a is placed between the adjacent wire rod layers L2 and L3, thereby being compressively held by the metallic wire rod portions 20(1) and 20(2) with which the start end portion 20a is in contact on the inner diameter side, and the metallic wire rod portions 20(3) and subsequent portions with which the start end portion 20a is in contact on the outer diameter side.

Accordingly, the start end portion 20a is mechanically fixed with a frictional force. Therefore, falling-out or fraying of the start end portion 20a can be prevented without joining the contact portions between the start end portion 20a and the metallic wire rod portions constituting the wire rod layers by a metallurgical method such as welding or sintering.

### [Manufacturing method of filter]

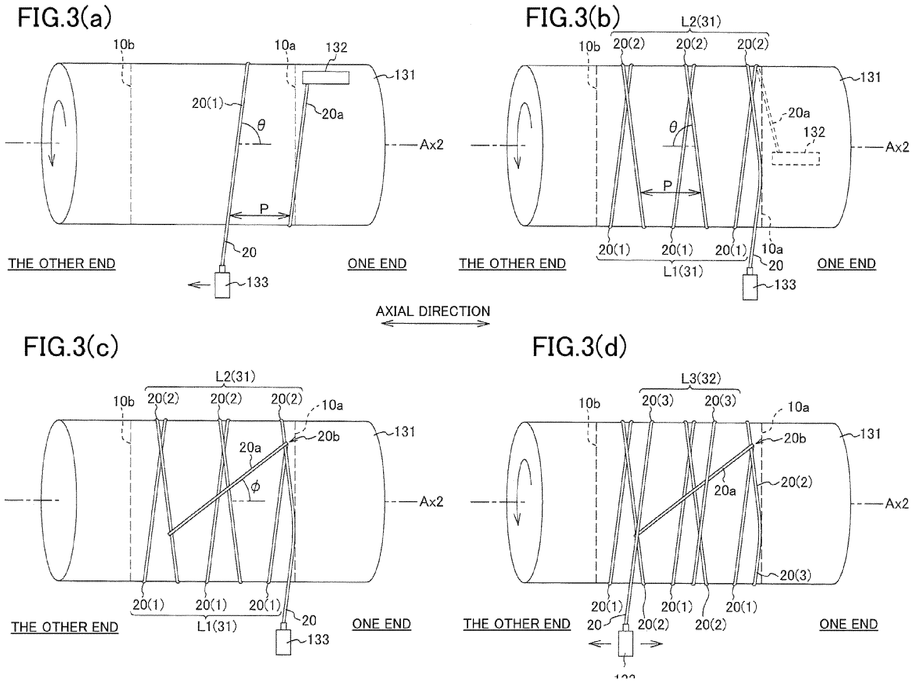

FIGS. 3(a) to 3(d) are schematic diagrams for explaining manufacturing processes of a filter according to one embodiment of the present invention.

As illustrated in FIG. 3(a), first, the start end portion 20a of the metallic wire rod 20 is held by a holder 132 that is positioned on one end side of a mandrel 131 in the axial direction (a wire rod holding process). The mandrel 131 rotates on an axis line Ax2 thereof. The holder 132 rotates with the mandrel 131.

In a state in which a tension of 0.01 to 20 [kgf] is applied to the metallic wire rod 20, the mandrel 131 is rotated on the central axis Ax2 at a predetermined speed in a fixed direction, and a guide member 133 that supplies the metallic wire rod 20 is reciprocated at a predetermined speed along the central axis Ax2 of the mandrel 131. With this operation, the metallic wire rod 20 is wound on the outer circumference of the mandrel 131 spirally and in a multilayered manner with a predetermined pitch P while inclined at a predetermined angle θ with respect to the central axis Ax2 as illustrated in FIG. 3(b) (a first winding process and an inner cylindrical-body producing process). In this process, the metallic wire rod 20 is wound by two or more layers (corresponding to one or more reciprocations) on the mandrel 131. In this process, the inner cylindrical body 31 including the wire rod layer L1 located on the innermost circumference is produced. The inner cylindrical body 13 has a mesh of the metallic wire rod portions 20(1) and 20(2) (the metallic wire rod portions 20(1) to 20(m)) respectively constituting the adjacent wire rod layers L1 and L2 (the wire rod layers L1 to Lm) intersecting with each other.

As illustrated in FIG. 3(c), the start end portion 20a of the metallic wire rod 20 is folded back from one end side of the mandrel 131 in the axial direction toward the other end side thereof, to be positioned on the outer circumferential side of the inner cylindrical body 31 (a folding process). With this process, the folded-back portion 20b is formed between the start end portion 20a and the metallic wire rod portion 20(1). The wire rod layer L2 (the wire rod layers L2 to Lm in a case in which m is equal to or more than 3) is interposed between the metallic wire rod portion 20(1) and the start end portion 20a. The position of the folded-back portion 20b is set to be on an inner side than one end edge 10a of the produced filter in the axial direction. The length of the start end portion 20a and a fold-back angle ϕ thereof are set such that a number of contact portions required to prevent the start end portion 20a from falling out or fraying can be formed between the start end portion 20a and the inner cylindrical body 31 and between the start end portion 20a and the outer cylindrical body 32.

As illustrated in FIG. 3(d), in a state in which a tension of 0.01 to 20 [kgf] is applied to the metallic wire rod 20, the mandrel 131 is rotated on the central axis Ax2 at the predetermined speed in the fixed direction and the guide member 133 that supplies the metallic wire rod 20 is reciprocated along the central axis Ax2 of the mandrel 131 at the predetermined speed. With this operation, the metallic wire rod 20 is wound on the outer circumferential side of the start end portion 20a and the inner cylindrical body 31 while inclined at the predetermined angle θ with respect to the central axis Ax2, whereby the outer cylindrical body 32 is produced (a second winding process and an outer cylindrical-body producing process). The outer cylindrical body 32 has a mesh of the metallic wire rod portions 20(3) to 20(n) (the metallic wire rod portions 20(m+1) to 20(n)) respectively constituting the adjacent wire rod layers L3 to Ln (the wire rod layers Lm+1 to Ln) intersecting with each other.

After the n wire rod layers are formed, a termination end portion (an end portion on the winding termination side) of the metallic wire rod 20 is joined to an appropriate place of the outer circumferential surface of a hollow cylindrical body formed around the mandrel 131 by resistance spot welding or the like, and the metallic wire rod 20 is cut off. The hollow cylindrical body is removed from the mandrel 131. The hollow cylindrical body manufactured by the method described above is used as it is as a filter without sintering processing performed on the entire body.

Alternatively, as required, the hollow cylindrical body may be used as a filter after contact portions where adjacent metallic wire rod portions are in contact with each other are metallurgically joined to each other by heat treatment such as sintering on the hollow cylindrical body removed from the mandrel 131.

### [Effects]

As described above, according to the present embodiment, the start end portion 20a of the metallic wire rod 20 is folded back and placed between adjacent wire rod layers Lm and Lm+1. Therefore, the start end portion 20a can be efficiently processed at a low cost.

Since the folded-back portion 20b is formed at a position on an inner side than an end edge (one end edge 10a) of the filter 10 in the axial direction, the folded-back portion 20b is not protruded from the filter 10. The folded-back portion 20b is not caught on other components or the like at the time of handling of the filter 10 such as a transportation or assembly operation. Therefore, a force to draw out the start end portion 20a is less likely to be applied thereon. In a case in which the filter 10 is used with other components tightly attached and sealed to the end faces (or the end edges) of the filter 10 in the axial direction, to prevent a filtration subject from leaking out of the end edges of the filter 10, the sealing performance is enhanced because the folded-back portion 20b is not protruded from the filter 10.

Since the folded-back portion 20b formed between the metallic wire rod portion 20(1) and the start end portion 20a is plastically deformed, it is possible to effectively prevent the start end portion 20a from slipping out of the filter 10 (fraying) based on the strength of the metallic material itself.

When the number m of wire rod layers constituting the inner cylindrical body 31 is small, the number of the contact portions where the metallic wire rod portions constituting the inner cylindrical body 31 are in contact with the start end portion 20a is small. Furthermore, when the number m of the wire rod layers constituting the inner cylindrical body 31 is small, supporting strength that supports the start end portion 20a on the inner diameter side when the start end portion 20a is folded and placed between the wire rod layers Lm and Lm+1 is also low. Therefore, fixing (compressive holding force) of the start end portion 20a is likely to be insufficient. Accordingly, depending on the use mode of the filter, it is desirable that the contact portions described above are metallurgically joined by sintering or the like to fix the start end portion 20a with a required force.

### [Second embodiment]

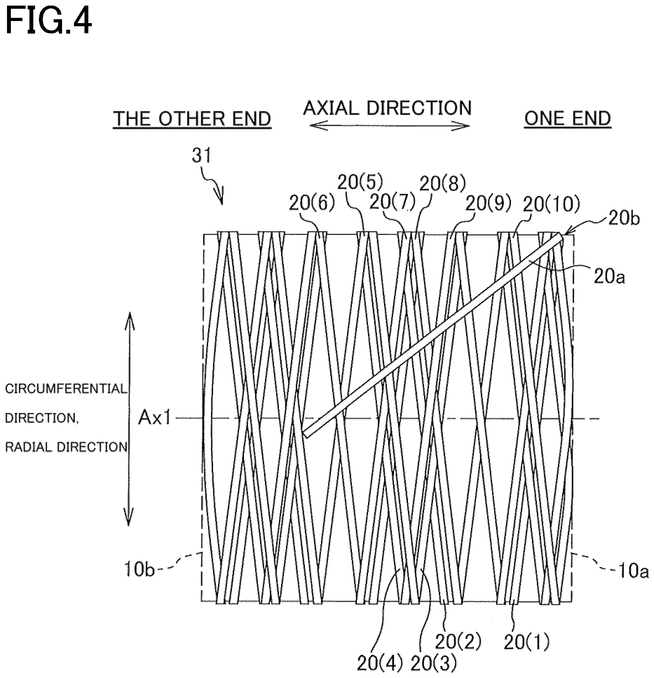

FIG. 4 is a schematic front view illustrating a processing method of a start end portion of a filter according to a second embodiment of the present invention. In FIG. 4, illustrations of the thickness of the filter in the radial direction are partially omitted.

The start end portion 20a is positioned on the outer circumferential side of the inner cylindrical body 31. When the number m of the wire rod layers included in the inner cylindrical body 31 is small as illustrated in FIG. 2, and the pitch P (see FIG. 3(a)) of the metallic wire rod 20 is large, the start end portion 20a has a risk of protruding toward an inner diameter side than the wire rod layer L1 at the time of winding of the metallic wire rod portion 20(3) and subsequent wire rod portions.

In the present embodiment, the inner cylindrical body 31 is produced to position the start end portion 20a on an outer diameter side than the radial position of the wire rod layer L1 located on the innermost circumference. That is, in the present embodiment, the winding angle θ of the metallic wire rod 20 constituting the inner cylindrical body 31, the pitch P of the metallic wire rod 20, and the number m of wire rod layers included in the inner cylindrical body 31 are set to prevent the start end portion 20a from being at the same position as the radial position of the wire rod layer L1 located on the innermost circumference and from being protruded toward an inner diameter side than the radial direction of the wire rod layer L1.

Among the above parameters, the pitch P and the number m of wire rod layers are particularly important. The number m of wire rod layers can be small when the pitch P is small, and the pitch P can be large when the number m of wire rod layers is large. However, if the number m of wire rod layers is too large, it is difficult to position the folded-back portion 20b on the inner side of an axial end edge of the filter 10.

FIG. 4 illustrates an example in which the inner cylindrical body 31 including ten wire rod layers is produced.

When the contact portions where adjacent metallic wire rod portions are in contact with each other in a filter are not joined by sintering, the winding angle θ, the pitch P, and the number of wire rod layers of each of the inner cylindrical body 31 and the outer cylindrical body 32, and the length and the fold-back angle ϕ of the start end portion 20a are set to enable a sufficient number of contact portions to be formed between the start end portion 20a and the inner cylindrical body 31, and between the start end portion 20a and the outer cylindrical body 32, and to enable a sufficient compressive holding force to be applied (to enable a frictional force to be generated) to the start end portion 20a. This prevents the start end portion 20a from unwinding or fraying.

### [Effects]

As described above, according to the present embodiment, since the start end portion 20a is prevented from protruding to an inner diameter side than the wire rod layer L1 on the innermost circumference, the shape of the filter on the inner circumference side can be stabilized. It is possible to prevent the end edge (the cut end) of the metallic wire rod 20 on the winding start side from protruding into a hollow portion of the filter 10 across the inner circumferential surface. Furthermore, when the start end portion 20a is prevented from protruding toward an inner diameter side than the wire rod layer L1, a compressive holding force (frictional force) sufficient to mechanically fix the start end portion 20a can be also obtained.

Since the start end portion 20a can be mechanically fixed by being placed between the inner cylindrical body 31 and the outer cylindrical body 32, it is unnecessary to subject the filter to heat treatment to join the contact portions formed between the start end portion 20a and other metallic wire rod portions by a metallurgical method (for example, heat treatment to be performed on the entire hollow cylindrical filter to sinter the contact portions described above). Therefore, the manufacturing cost of the filter 10 can be decreased and the manufacturing time of the filter 10 can be reduced.

### [Third embodiment]

### <Configuration 1>

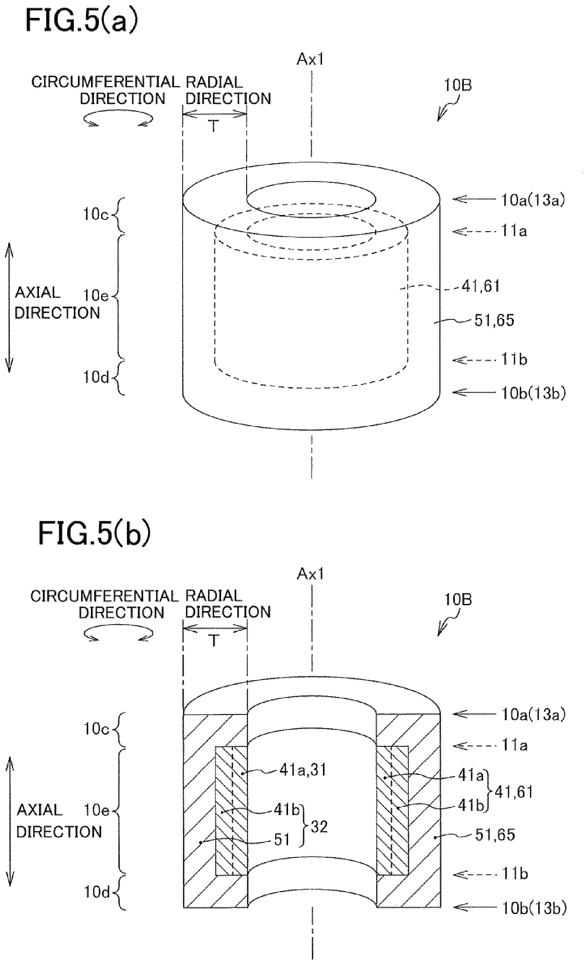

FIGS. 5 are diagrams illustrating a hollow cylindrical filter according to a third embodiment of the present invention, where (a) is a perspective view and (b) is a perspective view illustrating a part of the filter in a vertical section. Parts identical to those of the first and second embodiments are denoted by like reference signs and explanations thereof are omitted as appropriate.

As illustrated in FIG. 5(b), the filter 10 (10B) includes a (at least one) short cylindrical body 41 including a metallic wire rod wound spirally and in a multilayered manner, and a (at least one) long cylindrical body 51 including a metallic wire rod wound spirally and in a multilayered manner to overlie the short cylindrical body 41 so as to cover the entire periphery (the entire outer circumferential surface and the whole of the both end faces in the axial direction) of the short cylindrical body 41 except the inner circumferential surface thereof.

The short cylindrical body 41 is shorter than the long cylindrical body 51 in the axial length. The short cylindrical body 41 is arranged at an intermediate position of the long cylindrical body 51 in the axial direction. That is, the both end portions of the long cylindrical body 51 in the axial direction are protruded outward in the axial direction than the end edges of the short cylindrical body 41 in the axial direction.

### <Configuration 2>

The short cylindrical body 41 illustrated in the present example is constituted of a hollow cylindrical winding body (one winding body block) including a continuous metallic wire rod wound spirally and in a multilayered manner, and constitutes a core portion 61 positioned on the innermost circumference of the filter 10B.

In this example, one winding body block is defined as a part of a winding body in which the winding range of a metallic wire rod (the reciprocating range of the metallic wire rod in the axial direction) is fixed, or a part of a winding body created in such a manner that the winding range of a metallic wire rod continuously changes in the axial direction. An example of the latter is a case in which the winding range of the metallic wire rod is gradually decreased at the same ratio in the axial direction during winding. One winding body block is a hollow cylindrical body wound spirally and in a multilayered manner with the continuous metallic wire rod 20.

The core portion 61 is a winding body block first produced at the time of manufacturing of the filter 10B. The core portion 61 constitutes a part of the inner circumferential surface of the filter 10B. In the core portion 61, the entire periphery (the whole of the both end faces in the axial direction and the entire outer circumferential surface) of the core portion 61 is enclosed by another winding body block. The core portion 61 is constituted of at least a portion of the metallic wire rod 20 adjacent to the start end portion 20a of the metallic wire rod 20 with the folded-back portion 20b interposed therebetween. The core portion 61 may include the start end portion 20a of the metallic wire rod 20. It is alternatively possible that the core portion 61 does not include the start end portion 20a.

The long cylindrical body 51 illustrated in the present example encloses the entire periphery of the short cylindrical body 41 being the core portion 61, and constitutes an outer envelope 65 of the filter 10B. The long cylindrical body 51 is a hollow cylindrical winding body (one winding body block) including a continuous metallic wire rod wound spirally and in a multilayered manner.

The inner circumferential surface of the filter 10B is defined by the inner circumferential surface of the short cylindrical body 41 (the core portion 61) throughout in the axial direction, and the inner circumferential surface of the long cylindrical body 51 (the outer envelope 65) at both end portions in the axial direction. The both end faces and the outer circumferential surface of the filter 10B are defined by the both end faces and the outer circumferential surface of the long cylindrical body 51 (the outer envelope 65) in the axial direction.

In the present example, since the entire outer circumferential surface of the filter 10B is defined by the single long cylindrical body 51, generation of irregularities (bumps or depressions) on the outer circumferential side of the filter 10B resulting from enclosing of the short cylindrical body 41 in the filter 10B can be suppressed. Furthermore, the winding pattern appearing on the both end faces and the outer circumferential surface of the filter 10B becomes uniform.

### <Manufacturing method>

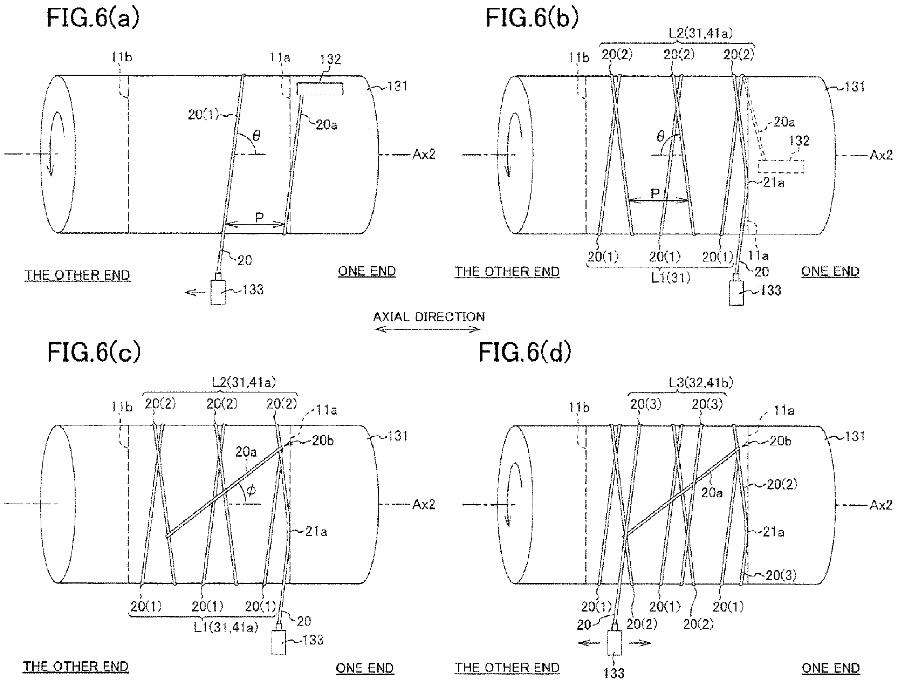

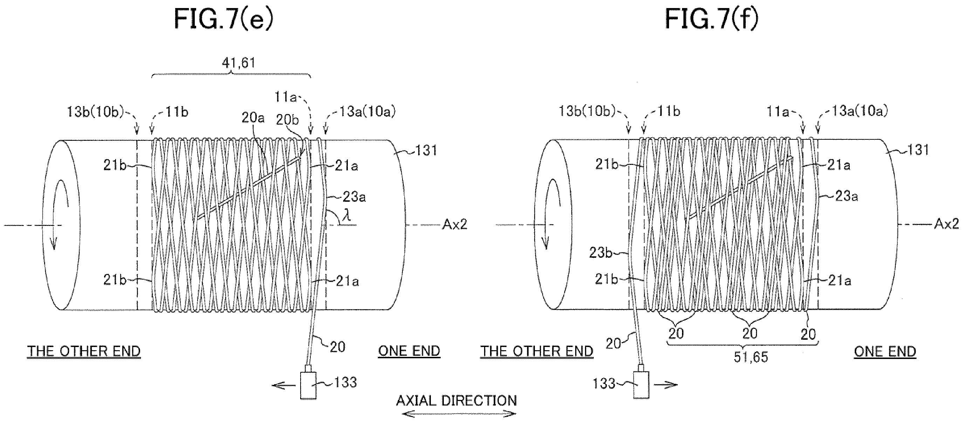

FIGS. 6(a) to 6(d), 7(e), and 7(f) are schematic diagrams for explaining manufacturing processes of a filter according to the third embodiment.

The manufacturing processes of the filter 10B include a process (FIGS. 6(a) to 6(d)) of winding the metallic wire rod 20 spirally and in a multilayered manner to produce the short cylindrical body 41 (the core portion 61) constituted of a winding body, and a process (FIGS. 7(e) and 7(f)) of winding the metallic wire rod 20 spirally and in a multilayered manner to produce the long cylindrical body 51 (the outer envelope 65) constituted of a winding body so as to cover the outer circumferential surface of the short cylindrical body 41 and the both end faces thereof in the axial direction.

The process of creating the short cylindrical body 41 illustrated in FIGS. 6(a) to 6(d) is the same as that illustrated in FIGS. 3(a) to 3(d). In the third embodiment, inverted portions 21a and 21b are formed in the metallic wire rod 20 by changing the direction of the spiral of the metallic wire rod 20 (switching wire rod layers) at inversion positions 11a and 11b. The inversion positions 11a and 11b correspond to positions of the axial end edges of the short cylindrical body 41. The inverted portions 21a and 21b are different from those illustrated in FIGS. 3 in not forming the axial end edges (the end faces) of the filter 10B. For example, the number of wire rod layers included in the short cylindrical body 41 is set to about 2 to 10000 (corresponding to about 1 to 5000 reciprocations).

After the short cylindrical body 41 is formed, the long cylindrical body 51 is produced to overlie the short cylindrical body 41 without cutting of the metallic wire rod 20.

As illustrated in FIGS. 7(e) and 7(f), in a state in which a tension of 0.01 to 20 [kgf] is applied to the metallic wire rod 20, the mandrel 131 is rotated on the central axis Ax2 in a fixed direction at a predetermined speed, and the guide member 133 that supplies the metallic wire rod 20 is reciprocated at a predetermined speed along the central axis Ax2 of the mandrel 131. The reciprocation range of the guide member 133 is set to a range between inversion positions 13a and 13b. Portions of the metallic wire rod 20 constituting the long cylindrical body 51 are wound in an axial range different from that of the short cylindrical body 41. The inversion positions 13a and 13b correspond to the positions of the end edges 10a and 10b of the long cylindrical body 51 in the axial direction, respectively. Inverted portions 23a and 23b form the axial end edges (the end faces) of the filter 10B. For example, the number of wire rod layers included in the long cylindrical body 51 is set to about 4 to 19998 (corresponding to about 2 to 9999 reciprocations).

With this operation, the long cylindrical body 51 is produced by winding the metallic wire rod 20 immediately on the outer circumference side of the short cylindrical body 41 while the metallic wire rod 20 is inclined at a predetermined angle λ with respect to the central axis Ax2. The long cylindrical body 51 has a mesh in which portions of the metallic wire rod 20 constituting adjacent wire rod layers L intersect with each other. The winding angle λ of the long cylindrical body 51 can be the same as the winding angle θ of the short cylindrical body 41. However, since the short cylindrical body 41 is previously wound, the angle λ can be easily set to be smaller than the angle θ.

The metallic wire rod 20 is wound while being brought into contact with the mandrel 131 by the applied tension between the inversion positions 11a and 13a and between the inversion positions 11b and 13b. The metallic wire rod 20 is wound on the outer circumferential side of the short cylindrical body 41 between the inversion positions 11a and 11b. Therefore, the long cylindrical body 51 covers the both end faces of the short cylindrical body 41 in the axial direction, and the side surface thereof on the outer circumferential side. The distance between the inversion positions 11 and 13 is set to cause a radial length T to be substantially uniform also between the inversion positions 11 and 13, according to the shape of the metallic wire rod 20, winding conditions, or the like.

After a required number of wire rod layers are produced, a termination end portion (the end portion on the winding termination side) of the metallic wire rod 20 is joined to an appropriate place on the outer circumferential surface of the hollow cylindrical body formed around the mandrel 131 by resistance spot welding or the like, and the metallic wire rod 20 is cut. Subsequent processes are identical to those of the first embodiment.

With the method described above, a filter controlled to have the radial length T that is substantially constant entirely in the axial direction can be manufactured. In other words, the filter 10B can be controlled in such a manner that the both end portions in the axial direction are not enlarged in the diameter (or both shoulder portions thereof do not project in the outer diameter direction).

### <Position of start end portion>

With the manufacturing method described above, the start end portion 20a of the metallic wire rod 20 is folded and placed between the wire rod layers of the short cylindrical body 41 that defines the inner circumferential surface of the filter 10B (at a position indicated by dotted lines in FIG. 5(b)).

That is, an inner short cylindrical body 41a located on the inner diameter side in the short cylindrical body 41 corresponds to the inner cylindrical body 31 (see FIG. 1) located on an inner diameter side than a position where the start end portion 20a of the metallic wire rod 20 is folded and placed. An outer short cylindrical body 41b located on the outer diameter side in the short cylindrical body 41, and the long cylindrical body 51 correspond to the outer cylindrical body 32 (see FIG. 1) located on an outer diameter side than the position where the start end portion 20a of the metallic wire rod 20 is placed.

Alternatively, the start end portion 20a of the metallic wire rod 20 may be placed between the short cylindrical body 41 that defines the inner circumferential surface of the filter 10B and the long cylindrical body 51 adjacent to the short cylindrical body 41 on the outer diameter side. In this case, the short cylindrical body 41 constitutes the inner cylindrical body 31, and the long cylindrical body 51 constitutes the outer cylindrical body 32.

When the start end portion 20a of the metallic wire rod 20 is placed in the wire rod layer of the short cylindrical body 41, or between the short cylindrical body 41 and the long cylindrical body as described above, the folded-back portion 20b is not exposed outside the filter 10B. Accordingly, improvement in the resistance to pull-out of the start end portion, enhancement in the sealing performance on the end faces of the filter 10B, and the like can be achieved.

### <Difference in layer configuration according to axial positions>

As illustrated in FIGS. 5, the filter 10B has first multilayered regions 10c and 10d including a relatively-small number of wire rod layers at the both end portions in the axial direction, and has a second multilayered region 10e including a larger number of wire rod layers than that of the first multilayered regions 10c and 10d at the intermediate portion in the axial direction. In the present example, the first multilayered regions 10c and 10d are each configured only of parts of the long cylindrical body 51, and the second multilayered region 10e is configured to include the short cylindrical body 41 and the long cylindrical body 51.

As illustrated in FIGS. 7(e) and 7(f), the filter 10B includes a plurality of inverted portions 21 (21a and 21b) ···, 23 (23a and 23b) ··· where the winding direction of the metallic wire rod 20 is inverted. Some of the inverted portions are first inverted portions 21 ··· that do not define the end edges of the filter in the axial direction, and the remaining inverted portions are the second inverted portions 23 ··· that define the end edges of the filter in the axial direction. The first inverted portions 21 are located nearer the middle in the axial direction than the second inverted portions 23 are.

At the manufacturing of the filter 10B, the first inverted portions 21 ··· are formed prior to the second inverted portions 23 ···. All the first inverted portions 21 are covered by portions of the metallic wire rod 20 wound on the outer circumferential side after the first inverted portions 21 are formed.

### <Actual object photograph>

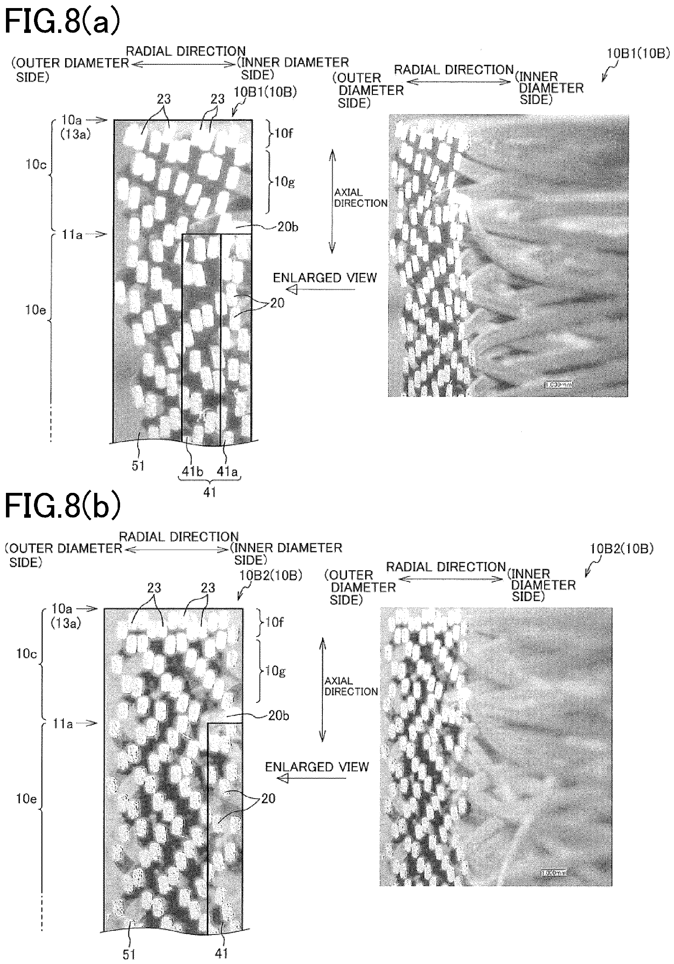

FIGS. 8(a) and 8(b) are diagrams illustrating a part of a vertical section of a filter in an actual object photograph. In both FIGS. 8(a) and 8(b), an enlarged view illustrates an image part of a cut section, which is extracted and indicated by signs.

A filter 10B1 (an example of the filter 10B) illustrated in FIG. 8(a) is configured to include the inner short cylindrical body 41a, the outer short cylindrical body 41b, and the long cylindrical body 51.

The start end portion of the metallic wire rod 20 is folded and placed between the inner short cylindrical body 41a and the outer short cylindrical body 41b. The folded-back portion 20b of the metallic wire rod 20 is formed between the innermost layer of the filter 10B1 and the innermost layer of the outer short cylindrical body 41b at an end portion of the short cylindrical body 41 in the axial direction.

A filter 10B2 (another example of the filter 10B) illustrated in FIG. 8(b) is configured to include the short cylindrical body 41 and the long cylindrical body 51.

The start end portion of the metallic wire rod 20 is folded and placed between the short cylindrical body 41 and the long cylindrical body 51. The folded-back portion 20b of the metallic wire rod 20 is formed between the innermost layer of the filter 10B2 and the innermost layer of the long cylindrical body 51 at an end portion of the short cylindrical body 41 in the axial direction.

In both FIGS. 8(a) and 8(b), the folded-back portion 20b is protruded outward in the axial direction than an end edge (the inversion position 11a) of the short cylindrical body 41 in the axial direction. It is found that the folded-back portion 20b is protruded and can be a factor that reduces the seating performance if one end edge (the position of the inversion position 1 1a) of the short cylindrical body 41 in the axial direction is not covered by the long cylindrical body 51.

In this example, the density of metallic wire rods is defined as the number (the quantity) of metallic wire rods (metallic wire rod portions) per unit volume of the filter (or in a sectional area range defined by the radial direction and the axial direction of the filter).

In a winding filter as the filter 10B, the metallic wire rod 20 is subject to a force to be pulled toward an intermediate portion in the axial direction when the winding direction is inverted. Accordingly, depending on the winding angles θ and λ, each of the inverted portions 21 and 23 is wound so as to be slightly drawn toward the intermediate portion in the axial direction at the inversion positions 11 and 13 (see FIGS. 6 and 7). At places where the metallic wire rod is inverted, the density of the metallic wire rods is likely to increase.

As illustrated in FIGS. 8, the inverted portions 23, 23 ··· are concentrated at the end edge 10a of the filter 10B in the axial direction. A high-density portion 10f where the density of the metallic wire rods 20 is locally high is produced at an extreme end of the filter 10B in the axial direction.

At the ends of the filter 10B in the axial direction, only portions of the metallic wire rod constituting the long cylindrical body 51 overlap in the radial direction. Therefore, a low-density portion 10g where the density of the metallic wire rods is lowest in the filter 10B is produced in the first multilayered region 10c including a small number of wire rod layers. Particularly, the density of the metallic wire rods at a radial position substantially the same as that of the short cylindrical body 41 is lower in the low-density portion 10g.

In the intermediate portion of the filter 10B in the axial direction, portions of the metallic wire rod constituting the long cylindrical body 51 and those constituting the short cylindrical body 41 overlap in the radial direction. Accordingly, in the second multilayered region 10e including a large number of wire rod layers, the density of the metallic wire rods is higher than that in the low-density portion 10g while lower than that in the high-density portion 10f.

As described above, the filter 10B illustrated in FIGS. 8 includes the low-density portion at the end portions in the axial direction, where the number of metallic wire rods per unit volume is smaller than that in the intermediate portion in the axial direction because the filter 10B internally includes the short cylindrical body 41.

It is also possible to form the first multilayered region 10c itself including a small number of wire rod layers as the high-density portion 10f and to eliminate the low-density portion 10g by shortening the distance between the inversion positions 11 and 13.

### <Effects>

In the present embodiment, the number of wire rod layers at end portions of the filter in the axial direction is smaller than that at the intermediate portion in the axial direction. Accordingly, the quantity of the inverted portions located at both ends of the filter in the axial direction is decreased relative to the quantity of wire rod layers in the intermediate portion in the axial direction. In the present embodiment, the inverted portions are formed also at places other than the axial ends.

In the present embodiment, it is possible to suppress the diameter of the both end portions of the filter in the axial direction from being enlarged due to overlapping of the inverted portions with each other in the radial direction at both ends of the filter in the axial direction. Furthermore, the shape of the filter can be controlled to cause the radial length T to be substantially uniform entirely in the axial direction. Therefore, it is possible to effectively prevent the filter from losing the shape or the metallic wire rod from fraying.

With the control of the number of wire rod layers, the radial length T at the end portions of the filter in the axial direction may be formed slightly smaller than that at the intermediate portion in the axial direction. In this case, for example, when the filter 10 is used in combination with another component having a cylindrical hole, the filter 10 can be easily inserted into the cylindrical hole with the end portion in the axial direction first.

The filter 10B according to the present embodiment has a configuration in which the short cylindrical body 41 and the long cylindrical body 51 different in the axial length are stacked in the radial direction, and does not have a configuration in which winding body blocks are arranged in the axial direction. Accordingly, there are no inverted portions in a positional relation opposing (or adjacent) in the axial direction. According to the present embodiment, it is possible to suppress the diameter at a part of the filter from being enlarged due to concentration of inverted portions only at one part in the axial direction.

In the present embodiment, the end faces of the short cylindrical body in the axial direction are covered by the long cylindrical body. Therefore, even when a folded-back portion of the metallic wire rod 20 is at an axial position substantially the same as that of the end edges of the short cylindrical body in the axial direction, the folded-back portion is not exposed outside the filter. For example, even when the number of wire rod layers in the inner short cylindrical body 41a illustrated in FIG. 8(a) is increased, the folded-back portion 20b of the metallic wire rod is not exposed outside.

Therefore, a compressive holding force (frictional force) sufficient to mechanically fix the start end portion of the metallic wire rod can be provided. Accordingly, the resistance to pull-out of the start end portion of the metallic wire rod is improved. Furthermore, since the shape of the end faces of the filter 10B in the axial direction is not affected by the folded-back portion 20b, the sealing performance at the end faces (or the end edges 10a and 10b) of the filter in the axial direction is enhanced.

In a winding filter, when the winding angle (see the angle θ illustrated in FIG. 6 or the like) of a metallic wire rod is decreased, the pressure loss can be reduced even when the filtration accuracy is increased. However, if the winding angle is decreased, the metallic wire rod is likely to slide toward the intermediate portion in the axial direction when the winding direction of the metallic wire rod is inverted. Therefore, there is a limitation on the magnitude of the winding angle (the minimum value of the angle settable as the winding angle).

However, in the present embodiment, as illustrated in FIGS. 7, the short cylindrical body 41 is produced before the long cylindrical body 51 is produced. The short cylindrical body 41 suppresses the metallic wire rod 20 wound to overlie the short cylindrical body 41 from being displaced toward the intermediate portion of the filter in the axial direction. Accordingly, the winding angle λ of the metallic wire rod in the long cylindrical body 51 (or a minimum value λmin settable as the angle λ) can be smaller than the winding angle θ of the metallic wire rod in the short cylindrical body 41 (or a minimum value θmin settable as the angle θ). Furthermore, even when the winding angle λ is decreased, the winding pattern is less likely to be disturbed. Since the winding angle λ can be freely set in this way, the flexibility in the design of the filter, such as the filtration accuracy or the pressure loss, is improved.

In the winding filter 10 illustrated in FIGS. 2, 3, and the like, when the winding angle θ of the metallic wire rod 20 is increased, the folded-back portion 20b becomes closer to the end portion of the filter 10 in the axial direction than in a case in which the winding angle is decreased. Therefore, there is a risk that the folded-back portion is protruded outward from the axial end of the filter 10 depending on the number of layers in the inner cylindrical body 31. To the contrary, to prevent the start end portion 20a from being exposed on the inner diameter side of the filter through the mesh after formation of the folded-back portion, the number of layers in the inner cylindrical body 31 needs to be increased. When the number of layers in the inner cylindrical body 31 is increased, the folded-back portion becomes closer to the end portion of the filter in the axial direction. Accordingly, there is a risk that the folded-back portion is protruded outward from the axial end of the filter.

In the present embodiment, since the short cylindrical body 41 (the core portion 61) is produced, the problems described above do not occur even when the number of layers in the short cylindrical body is increased. According to the present embodiment, the winding angle λ (FIGS. 7) of the metallic wire rod can be decreased, and it is possible to prevent the filter from losing the shape at the end portions in the axial direction.

The filter 10 may be configured in a manner described below. That is, the filter 10 may be configured in such a manner that the axial end face of the short cylindrical body 41 (the core portion 61) and that of the long cylindrical body 51 (the outer envelope 65) are at positions different in the axial direction on one side in the axial direction, and that the axial end face of the short cylindrical body 41 and that of the long cylindrical body 51 are at substantially the same positions in the axial direction on the other side in the axial direction. That is, the long cylindrical body 51 can be configured to cover at least one of the end faces of the short cylindrical body 41 in the axial direction.

As one example, the long cylindrical body 51 can cover at least one of the end faces of the short cylindrical body 41 in the axial direction, which is located on a side where the folded-back portion 20b is generated.

As one example, the filter 10 can be configured to include the first multilayered region 10c including a relatively-small number of wire rod layers at one end portion in the axial direction, and include the second multilayered region 10e including a relatively-large number of wire rod layers in the remaining portion (or another site) in the axial direction. Furthermore, the number of wire rod layers in the first multilayered region 10c may be controlled to cause the outer diameter of the region 10c to be substantially the same as or slightly smaller than the outer diameter of the intermediate portion in the axial direction.

The long cylindrical body 51 can cover the end face of the short cylindrical body 41 in the axial direction at least on a side in the axial direction where the shape of the end portion of the filter in the axial direction needs to be relatively strictly controlled.

### [Fourth embodiment]

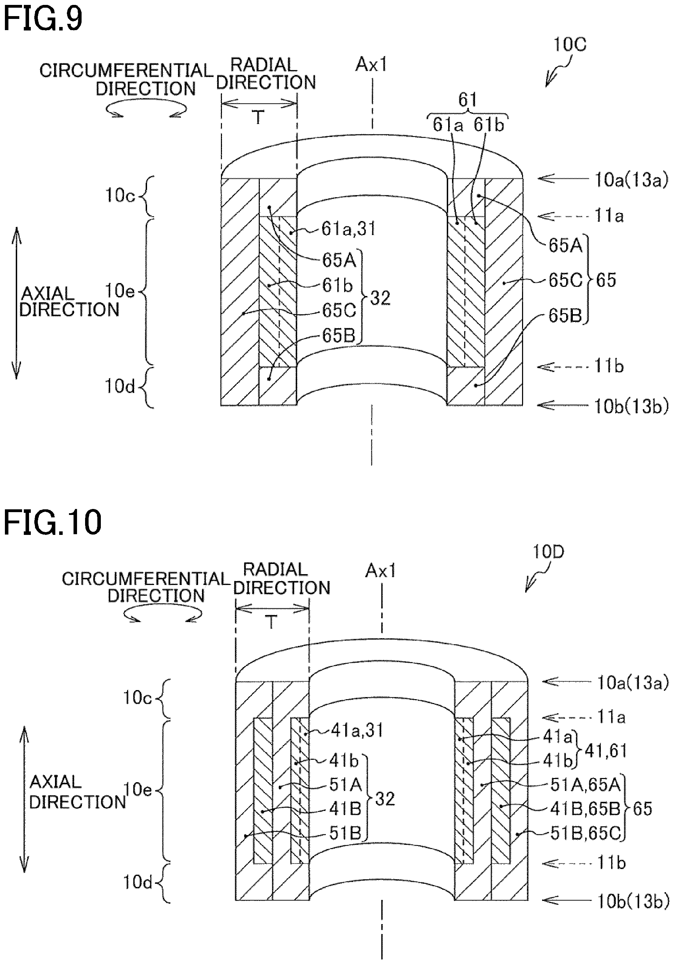

FIG. 9 is a perspective view illustrating a part of a hollow cylindrical filter according to a fourth embodiment of the present invention in a vertical section. Parts identical to those of the first to third embodiments are denoted by like reference signs and explanations thereof are omitted as appropriate.

In a case in which a filter includes the core portion 61 and the outer envelope 65 that encloses the core portion 61 as a filter 10C, the outer envelope 65 may be configured to include a plurality of winding body blocks (outer envelope blocks 65A to 65C). While FIG. 9 illustrates an example in which three outer envelope blocks are included, the quantity of the outer envelope blocks is not limited thereto. The positions, the shapes, the numbers of wire rod layers, and the like of the core portion 61 and the outer envelope blocks 65A to 65C included in the filter 10 are appropriately set depending on the entire shape, specifications, or the like required for the filter. The metallic wire rod 20 in the filter 10C can be continuous without being cut.

The illustrated filter 10C is produced in the order of the core portion 61 and the outer envelope 65.

The start end portion of the metallic wire rod can be folded and placed between an inner core portion 61a and an outer core portion 61b.

The outer envelope 65 is produced, for example, in the order of the first outer envelope block 65A positioned in a region on the inner circumferential side of one end portion in the axial direction, the second outer envelope block 65B positioned in a region on the inner circumferential side of the other end portion in the axial direction, and the third outer envelope block 65C that covers the entire region in the axial direction in a region on the outer circumferential side. The outer envelope blocks 65A to 65C are wound at different axial positions, and/or in different axial ranges.

The filter 10C includes the core portion 61 wound between the inversion positions 11a and 11b, the outer envelope block 65A wound between the inversion positions 11a and 13a, the outer envelope block 65B wound between the inversion positions 11b and 13b, and the outer envelope block 65C wound between the inversion positions 13a and 13b. The outer envelope block 65A and the outer envelope block 65B are arranged in the axial direction with respect to the core portion 61 and the outer envelope block 65C, and the filter 10C includes inverted portions that are in a positional relation opposing (or adjacent) in the axial direction.

### <Effects>

According to the present embodiment, the start end portion of a metallic wire rod is folded and placed inside the core portion 61 enclosed by the outer envelope 65, so that effects where a folded-back portion of the metallic wire rod is not exposed outside and is less likely to fray, and the like are provided. Identical effects are provided also by folding and placing the start end portion of a metallic wire rod between an appropriate outer envelope block selected according to the producing order of the outer envelope blocks 65A to 65C and the core portion 61.

In the present example, the effects described in the third embodiment are provided by appropriately setting the positions, the shapes, the numbers of wire rod layers, and the like of the core portion 61 and the outer envelope blocks 65A to 65C.

By constituting a filter of a plurality of winding body blocks, the shape of the filter can be freely controlled according to specifications or the like required for the filter.

Forming an outer envelope block that defines the entire outer circumferential surface of the filter at the outermost circumferential portion of the filter can prevent winding body blocks adjacent in the axial direction from being separated in the axial direction, and can prevent the filter from losing the shape due to the separation. Furthermore, the winding pattern appearing on the outer circumferential surface of the filter can be uniformed.

Also in the present example, the outer envelope 65 may be configured to cover at least one of the end faces of the core portion 61 in the axial direction, which is located on the side where the folded-back portion 20b is generated. For example, when the folded-back portion 20b is generated at a position corresponding to the inversion position 11a, the outer envelope block 65B may be omitted and the outer envelope block 65C may be wound between the inversion positions 13a and 11b.

### [Fifth embodiment]

FIG. 10 is a perspective view illustrating a part of a hollow cylindrical filter according to a fifth embodiment of the present invention in a vertical section. Parts identical to those of the first to fourth embodiments are denoted by like reference signs and explanations thereof are omitted as appropriate.

A filter 10D may have a configuration in which the short cylindrical bodies 41 (41A, 41B, ···) and the long cylindrical bodies 51 (51A, 51B, ···) are alternately stacked one on top of another.

The illustrated filter 10D is an example in which two sets of the short cylindrical body 41 arranged on the inner diameter side and the long cylindrical body 51 arranged immediately on the outer diameter side of the short cylindrical body 41 are placed next to each other in the radial direction. In the present example, the axial lengths of the short cylindrical bodies 41A and 41B are equal, and the axial lengths of the long cylindrical bodies 51A and 51B are equal.

The start end portion of the metallic wire rod is folded and placed between wire rod layers of the short cylindrical body 41A that defines the inner circumferential surface of the filter.

The inner short cylindrical body 41a in the present example corresponds to the inner cylindrical body 31 (see FIG. 1 and the like) that is located on the inner diameter side than a portion in which the start end portion of the metallic wire rod is folded and placed, and other parts correspond to the outer cylindrical body 32 illustrated in FIG. 1. The short cylindrical body 41A corresponds to the core portion 61 illustrated in FIG. 5(b) and the like, and other parts correspond to the outer envelope 65 in FIG. 5(b).

The start end portion of the metallic wire rod may be folded and placed between the short cylindrical body 41A, and the long cylindrical body 51A located immediately on the outer diameter side of the short cylindrical body 41A.

### <Modification>

In the filter 10D illustrated in FIG. 10, the axial lengths of the short cylindrical bodies 41A and 41B may be different from each other. The axial lengths of the long cylindrical bodies 51A and 51B may be different from each other. Furthermore, the long cylindrical body 51B located on the outer diameter side may enclose the entire outer surface of the long cylindrical body 51A located on the inner diameter side, so that the single long cylindrical body 51B defines the whole of the both end faces of the filter 10 in the axial direction and the outer circumferential surface thereof.

### <Effects>

The filter 10D described in the present embodiment has a configuration in which the layer structure of the filter 10D described in the third embodiment (FIGS. 5) is repeated in the radial direction, or a structure equivalent thereto. Therefore, the present embodiment provides identical effects to those in the third embodiment.

Since the filter 10D according to the present embodiment has a configuration in which the short cylindrical bodies 41 and the long cylindrical bodies 51 are alternately stacked in the radial direction, the radial length T (or the number of wire rod layers) of the filter 10D can be increased while an increase in the diameter of the axial end portions of the filter is suppressed. Furthermore, even when the radial length of the filter is increased, it is possible to prevent the filter from losing the shape at the end portions in the axial direction.

### [Sixth embodiment]

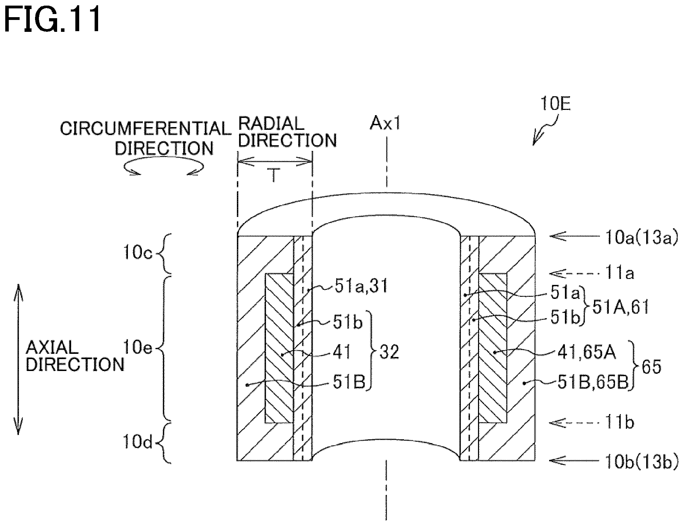

FIG. 11 is a perspective view illustrating a part of a hollow cylindrical filter according to a sixth embodiment of the present invention in a vertical section. Parts identical to those of the first to fifth embodiments are denoted by like reference signs and explanations thereof are omitted as appropriate.

A filter 10E has a configuration in which the short cylindrical body 41 and the long cylindrical body 51B are stacked to overlie the outer diameter side of the long cylindrical body 51A that defines the entire inner circumferential surface of the filter. The axial lengths of the long cylindrical bodies 51A and 51B are equal, and the long cylindrical bodies 51A and 51B extend entirely in the axial direction of the filter 10E. The short cylindrical body 41 is shorter in the axial length than the long cylindrical bodies 51A and 51B, and is arranged at an intermediate portion of the long cylindrical bodies 51A and 51B in the axial direction.

The long cylindrical body 51A constitutes the entire inner circumferential surface of the filter 10E. The start end portion of the metallic wire rod is folded and placed between wire rod layers of the long cylindrical body 51A (between an inner long cylindrical body 51a and an outer long cylindrical body 51b indicated by dotted lines in FIG. 11). Alternatively, the start end portion of the metallic wire rod may be folded and placed between the long cylindrical body 51A and the short cylindrical body 41.

The long cylindrical body 51B is produced by winding the metallic wire rod to overlie the short cylindrical body 41 so as to cover both the end faces of the short cylindrical body 41 in the axial direction and the outer circumferential surface thereof.

### <Effects>

When the filter includes the short cylindrical body 41 and the long cylindrical body 51 that covers the entire outer surface of the short cylindrical body 41, an increase in the diameter of the both end portions of the filter in the axial direction can be suppressed even when the short cylindrical body 41 does not constitute the inner circumferential surface of the filter.

Also when the start end portion of the metallic wire rod is folded and placed between wire rod layers of the long cylindrical body 51, it is possible to control the folded-back portion to be positioned on an inner side than the end edges of the filter in the axial direction.

As is apparent from the sectional configuration, the number of wire rod layers at the end portions in the axial direction is smaller than that at the intermediate portion in the axial direction also in the present example. From this configuration, a portion where the density of the metallic wire rods is low can be formed at the end portions in the axial direction.

### [Summary 1 of aspect examples of present invention, functions, and effects thereof]

When heat treatment such as sintering is not performed on an entire winding filter, how to perform fixing or anti-fray treatment of an end portion on the winding start side and an end portion on the winding termination side is important.

Patent Literature 1 (Japanese Patent Application Laid-open Publication No. 2007-319781) noted above describes that adjacent portions where wires overlap with each other are fixed at two or more places of a metallic wire rod in the outermost layer on the winding termination side to provide a winding filter being inexpensive and having a high shape retaining property even if heat treatment such as sintering is not performed on the entire winding filter. However, how to process the end portion on the winding start side is not clearly described.

### <First aspect>

The present aspect is a hollow cylindrical filter 10 produced by winding a metallic wire rod 20 spirally and in a multilayered manner. In the present aspect, a start end portion 20a of the metallic wire rod is folded and placed between wire rod layers Lm and Lm+1 adjacent to each other.

In a so-called "winding filter", a metallic wire rod is wound under a sufficient tension to keep a winding shape even when the filter is not sintered. Accordingly, the start end portion is subject to a compressive holding force of a sufficient level to prevent falling-out or fraying of the start end portion from metallic wire rod portions 20(m) and 20(m+1) respectively constituting the wire rod layers Lm and Lm+1. Also in a case in which contact portions in a filter are joined in a lump by sintering or the like, the start end portion is held so as not to fall out and fray at the time of handling before the joining processing.

Therefore, it is unnecessary to individually join the start end portion and metallic wire rod portions being in contact with the start end portion.

According to the present aspect, falling-out or fraying of the start end portion can be prevented only by folding and placing the start end portion between adjacent wire rod layers. Therefore, the start end portion of the metallic wire rod can be efficiently processed at a low cost.

### <Second aspect>

The present aspect is a hollow cylindrical filter 10 produced by winding a metallic wire rod 20 spirally and in a multilayered manner. The hollow cylindrical filter according to the present aspect includes an inner cylindrical body 31 including a first wire rod layer L1 located on an innermost circumference and being wound with two or more layers of the metallic wire rod, and an outer cylindrical body 32 located immediately on an outer circumferential side of the inner cylindrical body and being wound with the metallic wire rod, in which a start end portion 20a of the metallic wire rod is folded and placed between the inner cylindrical body and the outer cylindrical body.

According to the present aspect, the start end portion of the metallic wire rod can be efficiently processed at a low cost similarly to the first aspect.

### <Third aspect>

In the hollow cylindrical filter 10 according to the present aspect, a pitch P of the metallic wire rod 20 constituting the inner cylindrical body 31, and the number m of the wire rod layers included in the inner cylindrical body are set to prevent the start end portion 20a of the metallic wire rod from being at the same position as a radial position of the first wire rod layer L 1 located on an innermost circumference and from being protruded to an inner diameter side than the radial position of the first wire rod layer.

According to the present aspect, the shape of the filter on the inner circumference side can be stabilized. Furthermore, it is possible to prevent an end edge (a cut end) of the metallic wire rod on the winding start side from protruding into a hollow portion across the inner circumferential surface of the filter.

### <Fourth aspect>

In the hollow cylindrical filter 10 according to the present aspect, a folded-back portion 20b is formed between the start end portion 20a of the metallic wire rod 20 and the metallic wire rod portion 20(1) constituting the first wire rod layer L1, and the folded-back portion is positioned on an inner side than an axial end edge 10a of the hollow cylindrical filter.

According to the present aspect, the folded-back portion is not caught on other components or the like at the time of handling the filter, such as a transportation or assembly operation. Therefore, a force to draw out the start end portion is less likely to be applied thereon. Furthermore, when other components are tightly attached and sealed to end faces (or end edges) of the filter in the axial direction, the sealing performance is enhanced.

### <Fifth aspect>

The present aspect is a manufacturing method of a hollow cylindrical filter 10 including a metallic wire rod 20 wound spirally and in a multilayered manner.

The present manufacturing method includes a wire rod holding process (FIG. 3(a)) of holding a start end portion 20a of the metallic wire rod on one end side of a mandrel 131 in an axial direction with a holder 132 that rotates with the mandrel, a first winding process (FIGS. 3(a) and 3(b)) of rotating the mandrel and winding two or more layers of the metallic wire rod on the mandrel to produce an inner cylindrical body 31 including a first wire rod layer L1 located on an innermost circumference, a folding process (FIG. 3(c)) of folding the start end portion of the metallic wire rod toward another end of the mandrel in the axial direction to be positioned on an outer circumferential side of the inner cylindrical body, and a second winding process (FIG. 3(d)) of rotating the mandrel and winding the metallic wire rod on an outer circumferential side of the start end portion and the inner cylindrical body to produce an outer cylindrical body 32.

The present aspect has the same effects as those of the first aspect.

### [Summary 2 of aspect examples of present invention, functions, and effects thereof]

Patent Literature 1 (Japanese Patent Application Laid-Open Publication No. 2007-319781) noted above describes that an anti-fray portion obtained by winding a metallic wire rod located on the outermost circumference like a headband along the circumferential direction is provided in a range of an axial length within 20% from each of ends in the axial direction. With provision of the anti-fray portion, fray of the metallic wire rod at the both end portions in the axial direction can be effectively suppressed and a winding filter being inexpensive and having a high shape retaining property can be provided without heat treatment such as sintering on the entire winding filter.

In a winding filter, the winding direction of a metallic wire rod is inverted at axial ends thereof. When the winding direction is inverted, the metallic wire rod is subject to a force to be pulled toward an intermediate portion in the axial direction. Therefore, depending on the winding angle of the metallic wire rod, the metallic wire rod is slightly drawn toward the intermediate portion in the axial direction at the axial ends of the filter. As a result, the filter is likely to have an hourglass shape in which the axial end portions are larger in the diameter than the axial intermediate portion. A filter having an hourglass shape is likely to lose the shape at the axial end portions and the metallic wire rod is likely to fray.

In Patent Literature 1, fray of a metallic wire rod at the axial end portions is suppressed by pressing appropriate places at the end portions in the axial direction of the filter from the outer circumferential side toward the inner diameter. However, control on the shape of the filter is not considered in Patent Literature 1.

### <First aspect>

The present aspect is a hollow cylindrical filter 10 produced by winding a metallic wire rod 20 spirally and in a multilayered manner, which includes a core portion 61 constituted of a hollow cylindrical winding body (a winding body block) including the metallic wire rod that is continuous and is wound spirally and in a multilayered manner, and an outer envelope 65 enclosing an outer circumferential surface of the core portion and at least one end face thereof in an axial direction, in which the outer envelope includes at least one hollow cylindrical winding body block including the metallic wire rod that is continuous and is wound spirally and in a multilayered manner.

Constituting a filter of a plurality of winding body blocks enables the shape of the filter to be easily controlled according to specifications or the like required for the filter, and design flexibility of the filter is improved.

### <Second aspect>

When an inclination angle of the metallic wire rod 20 with respect to a central axis Ax1 of the hollow cylindrical filter 10 is θ in the core portion 61, and λ in at least one of the winding body blocks constituting the outer envelope 65, θ>λ is met.

Due to production of the core portion prior to the winding body blocks constituting the outer envelope, the metallic wire rod is less likely to be displaced and the winding pattern is less likely to be disturbed even when the inclination angle λ of the metallic wire rod in the winding body blocks is decreased.

According to the present aspect, design flexibility of a filter, such as the filtration accuracy or the pressure loss is improved.

### <Third aspect>

The present aspect is a hollow cylindrical filter 10 produced by winding a metallic wire rod 20 spirally and in a multilayered manner, which includes a first multilayered region 10e at an intermediate portion in an axial direction, and a second multilayered region 10c at least at one of end portions in the axial direction, and in which the number of wire rod layers in the second multilayered region is smaller than that in the first multilayered region. That is, in the hollow cylindrical filter, the number of wire rod layers at least at one of end portions in the axial direction is smaller than that at an intermediate portion in the axial direction (or another site in the axial direction).

In the present aspect, the quantity of inverted portions located at least at one end of the filter in the axial direction is decreased relative to the quantity of wire rod layers at the intermediate portion of the filter in the axial direction. Therefore, an increase in the diameter of the end portions of the filter in the axial direction due to the inverted portions overlapping in the radial direction while being concentrated at the axial ends of the filter can be suppressed. Furthermore, with formation of the second multilayered region at an end portion in the axial direction, it is possible to execute control to reduce the radial length of the end portions of the filter in the axial direction (to decrease the outer diameter).

According to the present aspect, a filter can be controlled to have an appropriate shape to prevent the filter from losing the shape at the axial end portions and to suppress fray of the metallic wire rod.

### <Fourth aspect>

The present aspect is a hollow cylindrical filter 10 produced by winding a metallic wire rod 20 spirally and in a multilayered manner, which includes at least one short cylindrical body 41 including the metallic wire rod wound spirally and in a multilayered manner, and at least one long cylindrical body 51 including the metallic wire rod wound spirally and in a multilayered manner to overlie the short cylindrical body, so as to cover an outer circumferential surface of the short cylindrical body and at least one end face thereof in an axial direction.

In the present aspect, the short cylindrical body is not located at least at one of end portions of the filter in the axial direction. Therefore, the number of wire rod layers in this site is smaller than that at the intermediate portion of the filter in the axial direction. The quantity of inverted portions located at least at one end of the filter in the axial direction is decreased relative to the quantity of wire rod layers at the intermediate portion of the filter in the axial direction. Accordingly, an increase in the diameter of the end portions of the filter in the axial direction due to the inverted portions overlapping in the radial direction while being concentrated at the axial ends of the filter can be suppressed.

According to the present aspect, the filter can be controlled to have an appropriate shape to prevent the filter from losing the shape at axial end portions and to suppress fray of the metallic wire rod.

### <Fifth aspect>

In the hollow cylindrical filter 10 according to the present aspect, the metallic wire rod 20 constituting the short cylindrical body 41, and the metallic wire rod 20 constituting the long cylindrical body 51 are continuous.

According to the present aspect, it is possible to efficiently suppress the filter from losing the shape at axial end portions and the metallic wire rod from fraying at a low cost.

### <Sixth aspect>

In the hollow cylindrical filter 10 according to the present aspect, a start end portion 20a of the metallic wire rod 20 is folded from one end side in the axial direction and is placed between wire rod layers of the short cylindrical body 41 that defines an inner circumferential surface of the hollow cylindrical filter, or between the short cylindrical body that defines the inner circumferential surface of the hollow cylindrical filter and the long cylindrical body 51 adjacent to the short cylindrical body on an outer diameter side of the short cylindrical body.

In the present aspect, at least one of end faces of the short cylindrical body in the axial direction on a side where the folded-back portion 20b of the metallic wire rod is formed is covered by the long cylindrical body. Therefore, the folded-back portion is not exposed outside the filter.

### <Seventh aspect>

In the hollow cylindrical filter 10 according to the present aspect, one of the long cylindrical bodies 51 defines an entire outer circumferential surface of the hollow cylindrical filter.

According to the present aspect, it is possible to suppress irregularities (bumps or depressions) on the outer circumferential side of the filter from being generated due to enclosing of the short cylindrical body 41 in the filter. Furthermore, the winding pattern appearing on the outer circumferential surface of the filter becomes uniform.

### <Eighth aspect>

The present aspect is a hollow cylindrical filter 10 produced by winding a metallic wire rod 20 spirally and in a multilayered manner, in which a low-density portion 10g where the number of wire rods per unit volume is lower than that in an intermediate portion in an axial direction is provided at least at one end portion in the axial direction.

By reduction of the density of the metallic wire rods at the end portion of the filter in the axial direction, it is possible to suppress the density at the end portion in the axial direction from increasing even when the inverted portions located at an axial end are drawn toward the middle in the axial direction. As a result, an increase in the diameter of the end portion of the filter in the axial direction due to the inverted portions concentrated at the axial end of the filter and overlapping each other in the radial direction can be suppressed.

According to the present aspect, the filter can be controlled to have an appropriate shape to prevent the filter from losing the shape at the axial ends and suppress fray of the metallic wire rod.

### <Ninth aspect>

The present aspect is a hollow cylindrical filter 10 produced by winding a metallic wire rod 20 spirally and in a multilayered manner, which includes a plurality of inverted portions 21 and 23 where a winding direction of the metallic wire rod is inverted, and in which some of the inverted portions are first inverted portions 21 that do not define axial end edges of the hollow cylindrical filter, and remaining ones of the inverted portions are second inverted portions 23 that define the axial end edges of the hollow cylindrical filter.

The first inverted portions are located nearer the middle in the axial direction than the second inverted portions are. In the present aspect, the inverted portions included in the filter are prevented from being concentrated only at the axial ends. Accordingly, it is possible to suppress the diameter of the end portions of the filter in the axial direction from being enlarged due to the inverted portions concentrated at the axial ends of the filter and overlapping each other in the radial direction.

According to the present aspect, the filter can be controlled to have an appropriate shape to prevent the filter from losing the shape at axial end portions and to suppress fray of the metallic wire rod.

### <Tenth aspect>

In the hollow cylindrical filter 10 according to the present aspect, at least all of the first inverted portions 21 located at one of end portions in the axial direction are covered by portions of the metallic wire rod 20 wound on an outer circumferential side than the first inverted portions.

According to the present aspect, generation of irregularities (bumps or depressions) on the outer circumferential side of the filter due to presence of winding body blocks including the inverted portions that do not define the axial end edges of the filter can be suppressed.

### <Eleventh aspect>

The present aspect is a manufacturing method of a hollow cylindrical filter 10, the method including a process of winding a metallic wire rod 20 spirally and in a multilayered manner to produce a core portion 61 constituted of a winding body, and a process of winding the metallic wire rod spirally and in a multilayered manner to produce an outer envelope 65 including one or a plurality of winding body blocks each constituted of a winding body, in which the outer envelope covers an outer circumferential surface of the core portion, and at least one end face thereof in an axial direction.

The present aspect has the same effects as those of the first aspect.

### <Twelfth aspect>

The present aspect is a manufacturing method of a hollow cylindrical filter 10, the method including a process of winding a metallic wire rod 20 spirally and in a multilayered manner to produce a short cylindrical body 41, and a process of winding the metallic wire rod spirally and in a multilayered manner to overlie the short cylindrical body so as to cover an outer circumferential surface of the short cylindrical body and at least one end face thereof in an axial direction to produce a long cylindrical body 51.

The present aspect has the same effects as those of the fourth aspect.

### Reference Signs List

10, 10B to 10E filter, 10a one end edge (in axial direction), 10b the other end edge (in axial direction), 10c to10e multilayered region, 10f high-density portion, 10g low-density portion, 11, 11a, 11b inversion position (not defining end edges/end faces in axial direction) (first invention position), 13, 13a, 13b inversion position (defining end edges/end faces in axial direction) (second invention position), 20 metallic wire rod, 20a start end portion, 20b folded-back portion, 20(m), 20(n) metallic wire rod portion, 21, 21a, 21b inverted portion (not defining end edges/end faces in axial direction) (first inverted portion), 23, 23a, 23b inverted portion (defining end edges/end faces in axial direction) (second inverted portion), 31 inner cylindrical body, 32 outer cylindrical body, 41, 41A, 41B short cylindrical body, 41a inner short cylindrical body, 41b outer short cylindrical body, 51, 51A, 51B long cylindrical body, 51a inner long cylindrical body, 51b outer long cylindrical body, 61 core portion, 61a inner core portion, 61b outer core portion, 65 outer envelope, 65A to 65C outer envelope block, 131 mandrel, 132 holder, 133 guide member, Lm, Ln wire rod layer, Ax1 central axis (of filter), Ax2 central axis (of mandrel)

## Claims

1. A hollow cylindrical filter produced by winding a metallic wire rod spirally and in a multilayered manner, wherein
a start end portion of the metallic wire rod is folded and placed between wire rod layers adjacent to each other.

2. A hollow cylindrical filter produced by winding a metallic wire rod spirally and in a multilayered manner, the filter comprising:
an inner cylindrical body including a first wire rod layer located on an innermost circumference and being wound with two or more layers of the metallic wire rod; and
an outer cylindrical body located immediately on an outer circumferential side of the inner cylindrical body and being wound with the metallic wire rod, wherein
a start end portion of the metallic wire rod is folded and placed between the inner cylindrical body and the outer cylindrical body.

3. The hollow cylindrical filter according to claim 2, wherein a pitch of the metallic wire rod constituting the inner cylindrical body, and a number of the wire rod layers included in the inner cylindrical body are set to prevent the start end portion of the metallic wire rod from being at a same position as a radial position of the first wire rod layer and from being protruded to an inner diameter side than the radial position.

4. The hollow cylindrical filter according to any one of claims 1 to 3, wherein a folded-back portion is formed between the start end portion of the metallic wire rod and the metallic wire rod portion constituting the first wire rod layer, and the folded-back portion is positioned on an inner side than an axial end edge of the hollow cylindrical filter.

5. A manufacturing method of a hollow cylindrical filter including a metallic wire rod wound spirally and in a multilayered manner, the method comprising:
a wire rod holding process of holding a start end portion of the metallic wire rod on one end side of a mandrel in an axial direction with a holder that rotates with the mandrel;
a first winding process of rotating the mandrel and winding two or more layers of the metallic wire rod on the mandrel to produce an inner cylindrical body including a first wire rod layer located on an innermost circumference;
a folding process of folding the start end portion of the metallic wire rod toward another end of the mandrel in the axial direction to be positioned on an outer circumferential side of the inner cylindrical body; and
a second winding process of rotating the mandrel and winding the metallic wire rod on an outer circumferential side of the start end portion and the inner cylindrical body to produce an outer cylindrical body.

6. A hollow cylindrical filter produced by winding a metallic wire rod spirally and in a multilayered manner, the filter comprising:
a core portion constituted of a hollow cylindrical winding body including the metallic wire rod that is continuous and is wound spirally and in a multilayered manner, and an outer envelope enclosing an outer circumferential surface of the core portion and at least one end face thereof in an axial direction, wherein
the outer envelope includes at least one hollow cylindrical winding body block including the metallic wire rod that is continuous and is wound spirally and in a multilayered manner.

7. The hollow cylindrical filter according to claim 6, wherein θ>λ is met when an inclination angle of the metallic wire rod with respect to a central axis of the hollow cylindrical filter is θ in the core portion, and λ in at least one of the winding body blocks constituting the outer envelope.

8. A hollow cylindrical filter produced by winding a metallic wire rod spirally and in a multilayered manner, the filter including
a first multilayered region at an intermediate portion in an axial direction, and a second multilayered region at least at one of end portions in the axial direction, wherein
a number of wire rod layers in the second multilayered region is smaller than that in the first multilayered region.

9. A hollow cylindrical filter produced by winding a metallic wire rod spirally and in a multilayered manner, the filter comprising:
at least one short cylindrical body including the metallic wire rod wound spirally and in a multilayered manner; and
at least one long cylindrical body including the metallic wire rod wound spirally and in a multilayered manner to overlie the short cylindrical body, so as to cover an outer circumferential surface of the short cylindrical body and at least one end face thereof in an axial direction.

10. The hollow cylindrical filter according to claim 9, wherein the metallic wire rod constituting the short cylindrical body, and the metallic wire rod constituting the long cylindrical body are continuous.

11. The hollow cylindrical filter according to claim 9 or 10, wherein a start end portion of the metallic wire rod is folded from one end side in the axial direction and is placed between wire rod layers of the short cylindrical body that defines an inner circumferential surface of the hollow cylindrical filter, or between the short cylindrical body that defines the inner circumferential surface of the hollow cylindrical filter and the long cylindrical body adjacent to the short cylindrical body on an outer diameter side of the short cylindrical body.

12. The hollow cylindrical filter according to claim 9 or 10, wherein one of the long cylindrical bodies defines an entire outer circumferential surface of the hollow cylindrical filter.

13. The hollow cylindrical filter according to claim 11, wherein one of the long cylindrical bodies defines an entire outer circumferential surface of the hollow cylindrical filter.

14. A hollow cylindrical filter produced by winding a metallic wire rod spirally and in a multilayered manner, wherein
a low-density portion where a number of wire rods per unit volume is lower than that in an intermediate portion in an axial direction is provided at least at one end portion in the axial direction.

15. A hollow cylindrical filter produced by winding a metallic wire rod spirally and in a multilayered manner, the filter comprising
a plurality of inverted portions where a winding direction of the metallic wire rod is inverted, some of the inverted portions being first inverted portions that do not define axial end edges of the hollow cylindrical filter, and remaining ones of the inverted portions being second inverted portions that define the axial end edges of the hollow cylindrical filter.

16. The hollow cylindrical filter according to claim 14, wherein at least all of the first inverted portions located at one of end portions in the axial direction are covered by portions of the metallic wire rod wound on an outer circumferential side than the first inverted portions.

17. A manufacturing method of a hollow cylindrical filter, the method comprising:
a process of winding a metallic wire rod spirally and in a multilayered manner to produce a core portion constituted of a winding body; and
a process of winding the metallic wire rod spirally and in a multilayered manner to produce an outer envelope including one or a plurality of winding body blocks each constituted of a winding body, wherein
the outer envelope covers an outer circumferential surface of the core portion, and at least one end face thereof in an axial direction.

18. A manufacturing method of a hollow cylindrical filter, the method comprising:
a process of winding a metallic wire rod spirally and in a multilayered manner to produce a short cylindrical body; and
a process of winding the metallic wire rod spirally and in a multilayered manner to overlie the short cylindrical body so as to cover an outer circumferential surface of the short cylindrical body and at least one end face thereof in an axial direction to produce a long cylindrical body.
